# FASCICULE DE BREVET EUROPEEN

(11) **EP 1 154 850 B1**
(45) Date de publication et mention de la délivrance du brevet: **03.01.2007**
(21) Numéro de dépôt: 00903751.6
(22) Date de dépôt: 08.02.2000
(51) Int. Cl.: B01J 19/08, B01J 19/10, B01J 8/42, B01J 8/16, B01J 8/00, B01F 13/08

(54) **PROCEDE ET DISPOSITIF D'ACTIVATION D'UNE REACTION PHYSIQUE ET/OU CHIMIQUE EN MILIEU FLUIDE**
VERFAHREN UND VORRICHTUNG ZUM AKTIVIEREN EINER PHYSIKALISCHEN UND/ODER CHEMISCHEN REAKTION IN EINER FLÜSSIGKEIT
METHOD AND DEVICE FOR ACTIVATING A PHYSICAL REACTION AND/OR A CHEMICAL REACTION IN A FLUID MEDIUM

(30) Priorité: 08.02.1999 FR 9901658
(43) Date de publication de la demande: 21.11.2001
(73) Titulaire: Bienvenu, Gérard, 74250 Viuz-en-Sallaz (FR)
(72) Inventeur: Bienvenu, Gérard, 74250 Viuz-en-Sallaz (FR)
(74) Mandataire: Jouvray, Marie-Andrée
(86) Numéro de dépôt international: PCT/FR2000/000295
(87) Numéro de publication internationale: WO 2000/047318

(56) Documents cités:
- FR-A- 2 752 385
- GB-A- 1 048 789
- US-A- 4 071 225
- US-A- 4 632 315
- US-A- 5 222 808
- US-A- 5 227 138

## Description

### Domaine technique de l'invention

L'invention a trait à un procédé et à un dispositif d'activation d'une réaction physique ou chimique, permettant d'accroître la cinétique de la réaction. Elle a trait en particulier à un procédé permettant la précipitation de métaux dilués dans des solutions, qui consiste à :
- disposer le mélange dans un réacteur ayant deux parois se faisant face et proches l'une de l'autre, le mélange remplissant l'espace entre les deux parois et y formant une nappe de faible épaisseur et de longueur importante dans une direction définie par un axe géométrique parallèle aux parois,
- à agiter la solution par activation d'un moyen d'agitation disposé à l'extérieur du réacteur pour agir au travers desdites parois sur une zone d'agitation couvrant une partie de ladite nappe et ayant une faible dimension dans la direction de l'axe géométrique,
- et déplacer ledit moyen d'agitation pour que la zone d'agitation balaie sensiblement l'ensemble dudit espace situé entre les deux parois.

### Etat de la technique

Le document EP-A-0 014 109 décrit un procédé et un dispositif permettant de favoriser des réactions physiques et/ou chimiques dans un milieu fluide, en soumettant à un champ magnétique variable une substance magnétique dispersée dans le fluide et jouant un rôle physique et/ou chimique dans la réaction à favoriser.

Le champ magnétique est créé au moyen de différentes bobines électromagnétiques disposées à l'extérieur d'un récipient ou réacteur contenant le milieu fluide et la substance magnétique. Le réacteur est un cylindre de révolution. Les bobines sont disposées de préférence sur plusieurs niveaux suivant la hauteur du réacteur de manière à ce que la zone d'application du champ magnétique couvre une portion importante du réacteur, à raison de plusieurs électroaimants par niveau.

Pour certaines des réactions physiques et /ou chimiques que l'on souhaite favoriser par le procédé et le dispositif décrits ci-dessus, la vitesse linéaire maximale du fluide dans le réacteur s'avère déterminante pour l'efficacité de la réaction, et doit rester assez faible. Ceci est le cas en particulier pour les réactions de cémentation. On appelle ici cémentation le procédé consistant à remplacer un métal relativement noble M_{N} présent dans une solution sous forme ionique, par un métal plus réactif M_{R} introduit sous forme solide, selon une réaction de précipitation du type:

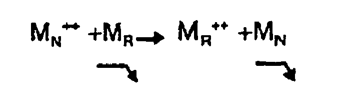

Dans une telle réaction, la cinétique du processus est fonction de la surface offerte par le métal réactif solide et de la concentration de la solution en métal noble. Il est donc souhaitable d'assurer un renouvellement rapide de la solution en contact avec le métal réactif, de manière à ce que la solution au voisinage du métal réactif ne soit pas appauvrie en ions de métal noble. Parallèlement, il est souhaitable d'augmenter la surface réactionnelle. Toutefois, si l'on diminue trop la taille des particules de métal réactifs afin d'augmenter leur surface réactionnelle, il devient difficile d'assurer une vitesse d'écoulement relatif de la solution par rapport aux particules de métal réactif, qui soit suffisante pour éviter l'appauvrissement de la solution mentionné ci-dessus. Par ailleurs, une vitesse d'écoulement trop importante ne permet pas de traiter la solution en une seule passe, ce qui impose de faire passer plusieurs fois la solution sur le même lit de métal réactif, en la mélangeant à chaque fois avec de la solution non traitée. Pour assurer une cinématique et un rendement global optimaux, un compromis est donc à trouver entre la taille des particules de métal réactif et la vitesse relative de la solution par rapport à ces particules. Il faut de plus éviter que la précipitation du métal noble s'opère à la surface du métal réactif, auquel cas la réaction se trouverait rapidement passivée.

Lorsque le procédé d'activation par champs électromagnétiques décrit précédemment est mis en oeuvre dans le cadre des réactions de cémentation visant à l'extraction d'un métal noble tel que le cuivre, à l'aide du fer utilisé comme métal réactif, l'application d'un champ magnétique alternatif permet une agitation de la solution et une accélération de sa cinétique. Toutefois, la vitesse linéaire moyenne de la solution dans la partie active du réacteur soumise au champ magnétique doit, pour les raisons explicitées précédemment, rester dans une fourchette dont la valeur supérieure est faible. Pour fixer les idées, si l'on utilise 3 niveaux de quatre paires d'électroaimants, comme décrit dans le document EP-A-0 014109, avec une solution titrant 3 g/l de cuivre, la vitesse linéaire moyenne de la solution est de l'ordre de 12 cm/s seulement.

Cette contrainte étant donnée, c'est la section de la partie active du réacteur qui détermine le débit du réacteur. Or dans un tel dispositif, la section du réacteur est fortement limitée par la puissance des électroaimants disponibles. En pratique, le diamètre utilisé ne dépasse pas 16 cm, d'où un débit maximal n'excédant pas 10 m³ / heure. Ces performances sont loin de celles attendues industriellement pour des procédés métallurgiques, si l'on songe que pour une installation industrielle permettant par exemple de produire 5000 tonnes de cuivre par an à partir d'une solution titrant 3 g/l de cuivre, un débit de 190 m3/heure est nécessaire, nécessitant avec la technologie décrite 20 réacteurs totalisant 240 paires d'électroaimants. Il faut souligner les coûts élevés engendrés par les électroaimants, qui disqualifient ce type de technologie. En effet, les électroaimants constituent un poste important lors de l'investissement. De plus, ils ont un coût de fonctionnement élevé puisqu'ils occasionnent une dépense énergétique importante, sans oublier les dépenses d'entretien et de maintenance.

On a par ailleurs tenté d'améliorer la surface d'échange entre le métal réactif et la solution au moyen de lits fluidisés. Un exemple de mise en oeuvre de ces lits fluidisés est décrit dans le brevet US-A-3 154 411. Dans cette réalisation, on extrait près de 99% du cuivre dissous dans une solution, Toutefois, le fer utilisé réagit de façon importante avec l'acidité du milieu avec pour conséquence un fort dégagement d'hydrogène et une perte de rendement en fer. En outre, ce procédé n'est pas continu et les céments de cuivre sont riches en fer. Par ailleurs, le brevet suisse No.9827/72 enseigne qu'on peut pallier les difficultés propres aux lits fluidisés en réalisant la cémentation de métaux tels que Cu, Cd, Co... sur des granules de zinc fluidisés dans un réacteur agité mécaniquement. Dans cette réalisation, les échanges sont excellents et les métaux précipités se trouvent entraînés hors du lit fluidisé tandis que les granules de zinc plus gros y stagnent jusqu'à atteindre une taille très petite. L'inconvénient de ce système réside dans la difficulté à mettre en oeuvre une agitation mécanique fiable dans un réacteur tubulaire de hauteur élevée. Tout système mécanique placé dans de telles conditions est attaqué chimiquement et abrasé par les céments. Pour fonctionner, ces systèmes doivent faire appel à des réalisations délicates telles que des paliers maintenus constamment sous pression de solution pure et neutre.

Le document US 5227138 concerne un dispositif destiné à déplacer un liquide biologique dans un capillaire dans on fait déplacer un piston ferromagnétique entraîné extérieurement par un aimant permanent. Ce dispositif est destiné à des usages biologiques.

Le document US 5222 808 décrit un mélange de deux liquides dans un capillaire. Il fait usage d'un système d'agitation magnétique utilisant un ou plusieurs noyaux magnétiques déplacés par un champ magnétique extérieur variable. Les noyaux magnétiques sont constitués par des poudres microscopiques qui s'orientent dans les lignes de champs en formant des agrégats. Ce dispositif est également destiné à des usages biologiques.

### Objet de l'invention

La présente invention vise à réduire les inconvénients propres aux technologies d'activation à distance décrites ci-dessus. Elle vise à élaborer un procédé de cémentation de métaux avec un rendement optimum. Elle vise à proposer une installation dont la capacité unitaire de traitement est importante. Elle vise également à permettre une plus grande agitation de la solution fluide intervenant dans la réaction à activer tout en limitant le nombre et le coût des moyens d'activation.

Le procédé d'activation selon l'invention est caractérisé en ce que:
- on utilise des particules solides ferromagnétiques fluidisées dans le courant de la solution, et étant le siège d'un dépôt lors de la réaction de cémentation, les particules ayant une granulométrie prédéterminée,
- on injecte la solution par le bas du réacteur en provoquant une circulation ascendante de la solution selon une direction verticale parallèle aux parois, alors que les particules solides ferromagnétiques sont introduites à la partie supérieure du lit fluidisé.

Les chocs provoqués entre les particules solides ferromagnétiques et les parois du réacteur permettent de détacher les dépôts métalliques en continu.

Préférentiellement, le moyen d'agitation est déplacé dans un mouvement alternatif entre une première position extrême et une deuxième position extrême situées de telle manière que la zone d'agitation soit apte à balayer sensiblement i'ensemble de ladite portion d'espace. Le déplacement du moyen d'agitation peut se limiter à un mouvement de va-et-vient en translation. La capacité de traitement est importante, car il n'y a pas de limitation de la section du réacteur qui peut avoir la largeur ou le diamètre voulu pour traiter un débit donné de solutions tout en conservant un entrefer limité. Le moyen d'agitation comporte une pluralité d'électroaimants alimentés séquentiellement en courants périodiques pour créer un champ électromagnétique susceptible d'orienter alternativement les particules ferromagnétiques selon deux directions distinctes. La couche mince de fluide dans la zone active permet d'avoir un maximum d'effet des forces magnétiques tout en ayant également un débit élevé ce qui n'est pas possible dans des réalisations cylindriques de l'état de la technique.

Alternativement ou cumulativement, on peut prévoir d'autres moyens d'agitations, par exemple au moins un transducteur ultrasonore, l'une au moins desdites parois étant chemisée par une membrane souple contenant un gel apte à transmettre les ultrasons, ledit transducteur ayant une tête en contact avec ladite membrane souple.

Selon un autre aspect de l'invention, celle-ci a également pour objet un dispositif pour la mise en oeuvre du procédé décrit précédemment, et comprenant des moyens d'introduction de la solution par le bas du réacteur en provoquant une circulation ascendante de la solution selon une direction verticale parallèle aux parois, alors que les particules solides ferromagnétiques sont introduites à la partie supérieure du lit fluidisé.

Selon une variante, le dispositif comporte des moyens d'injection de fils métalliques réactifs pouvant être utilisés pour l'injection d'adjuvants chimiques liquides.

Préférentiellement, chacune des deux parois est conformée de telle manière que sa surface externe est définie géométriquement par un ensemble de segments de droites parallèles à un même axe géométrique et s'appuyant sur une courbe quelconque s'étendant dans un plan perpendiculaire audit axe, la distance entre chaque segment de l'une des parois et l'autre paroi étant constante. Cette définition géométrique couvre en particulier le cas où chacune des deux parois est plane ou cylindrique à base circulaire.

Préférentiellement, le dispositif comporte en outre des moyens d'entraînement du fluide dans une direction d'entraînement parallèle audit axe géométrique, les parois comportant sur leurs faces en vis-à-vis, des aspérités formant des restrictions aptes à provoquer localement des accélérations du fluide.

L'invention est applicable en premier lieu à la cémentation des métaux non ferreux, tant dans le secteur de la métallurgie primaire que dans celui de la décontamination des sols et des solutions chargés en métaux lourds.

### Description sommaire des dessins

D'autres avantages et caractéristiques de l'invention ressortiront de la description qui va suivre de différents modes de réalisation de l'invention, donnés à titre d'exemple non limitatifs et représentés aux dessins annexés sur lesquels:
- la figure 1 représente schématiquement, en coupe suivant un plan vertical, un dispositif selon un premier mode de réalisation de l'invention ;
- la figure 2 représente une coupe suivant le plan II-II de la figure 1 ;
- la figure 3 représente une vue de côté du dispositif de la figure 1 ;
- la figure 4 représente une coupe d'un dispositif selon deuxième mode de réalisation de l'invention;
- la figure 5 représente une coupe verticale d'un dispositif selon un troisième mode de réalisation de l'invention ;
- la figure 6 représente une coupe selon le plan VI-VI de la figure 5 ;
- la figure 7 représente une coupe d'un dispositif selon un quatrième mode de réalisation de l'invention ;
- la figure 8 représente une coupe d'un dispositif selon un cinquième mode de réalisation de l'invention.

### Description d'un mode de réalisation préférentiel

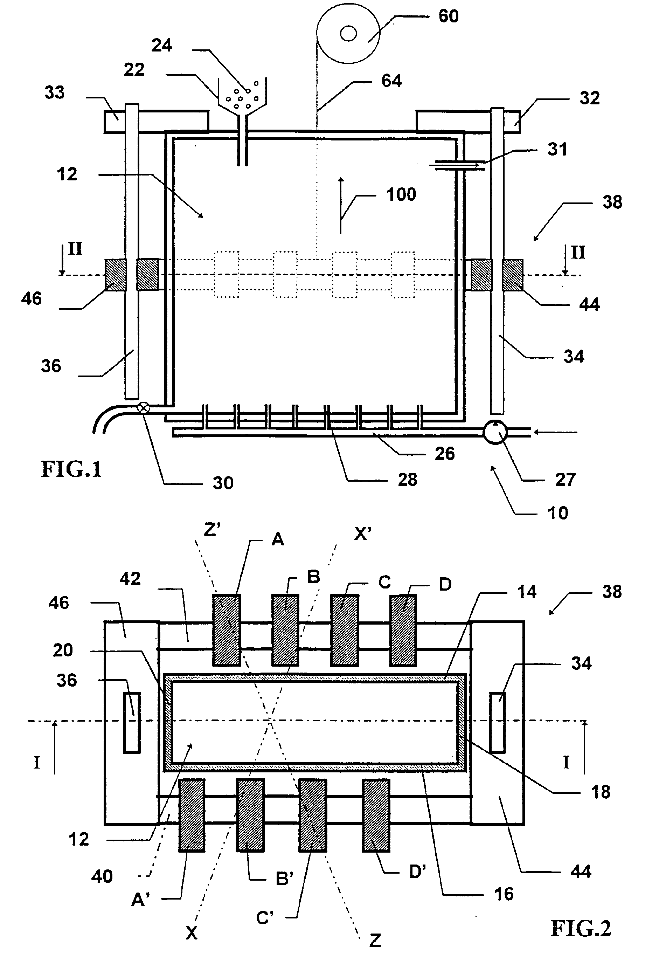

En référence aux figures 1 à 3, une installation d'activation 10 d'une réaction de cémentation comporte un réacteur 12 de section rectangulaire dans un plan perpendiculaire à celui de la figure 1, formant un récipient, avec deux grandes parois planes 14, 16 en regard l'une de l'autre et deux parois de faibles dimensions 18, 20. Chacune des grandes parois mesure 2 mètres de hauteur, et 16 centimètres de largeur. La distance entre les deux grandes parois est de l'ordre de 4 cm.

Le couvercle constituant la face supérieure du réacteur est équipé d'une trémie de chargement 22 destinée à l'alimentation du réacteur en billes de fer 24, constituant en l'espèce le métal réactif. La face inférieure est équipée d'une conduite d'alimentation 26 disposée en aval d'une pompe 27 et munie de buses d'injection 28. Cette conduite permet d'introduire la solution chargée du métal noble à extraire. Une vanne 30 permet la vidange du réacteur. En partie haute du réacteur est disposée une conduite d'évacuation 31. La circulation du mélange dans le récipient constitué par le réacteur est donc ascendante, et suit globalement une direction verticale 100 parallèle aux parois planes 14, 16.

Sur le couvercle du réacteur sont disposés deux flasques 32, 33 de fixation supportant chacun un rail latéral 34, 36. Ces rails guident en translation un chariot 38 formé de deux longerons 40, 42 et deux traverses 44, 46, entourant le réacteur 12, les traverses comportant des roulements linéaires coopérant avec les rails 34, 36. Le chariot 38 supporte dans l'exemple 4 paires d'électroaimants A, A', B, B', C, C' et D, D', dont les pôles sont reliés entre eux par des noyaux en tôle feuilletée d'acier au silicium.

L'installation comporte également un dispositif d'entraînement 50 du chariot, constitué par un moteur électrique 52 muni d'un variateur de vitesse, accouplé à un train réducteur 54 dont l'arbre de sortie 56 entraîne deux cylindres coaxiaux 58, 60 faisant office de treuils. Un câble 62, 64 relie chacun des treuils 58, 60 à l'un des longerons 40, 42.

Le dispositif fonctionne de la manière suivante.

Les électroaimants sont excités périodiquement paire par paire par exemple (AA') puis (BB') puis (CC') puis (DD') puis (DC') puis (CB') puis (BA') de manière à croiser les lignes de champs et à obliger les particules ferromagnétiques à s'orienter alternativement dans les deux directions xx' et zz' comme indiqué sur la Figure 2. L'excitation des électroaimants est pilotée au moyen d'un automate programmable dans l'ordre indiqué précédemment.

Simultanément, le chariot 38 supportant des électroaimants se déplace lentement de haut en bas et de bas en haut parallèlement à l'axe 100. La périodicité du chariot supportant les électroaimants est telle qu'il parcourt un aller et retour pendant un temps compris entre 10 secondes et 2 minutes.

En coordonnant le déplacement du chariot 38 et l'excitation des électroaimants, il est possible de programmer l'agitation pour la rendre maximale dans les zones les plus critiques telles que celles situées au niveau des injecteurs 28 de la solution. En ajustant bien les temps d'excitation et la vitesse du chariot 38 porteur des électroaimants, il est également possible de forcer en partie les particules situées en bas du lit fluidisé à remonter vers le sommet. Cela présente un avantage car la partie supérieure d'un lit fluidisé est toujours une zone peu active à forte porosité (peu de particules présentes et taille réduite des particules).

Pour illustrer l'effet de l'activation électromagnétique, des essais de cémentation d'une solution diluée de cuivre ont été réalisés avec le réacteur des figures 1 à 3.

La solution titrait au départ 2.5g/l de cuivre sous forme de sulfate en solution dans l'acide sulfurique à pH 1,5.

Un premier essai a été réalisé en lit fluidisé simple sans action du champ magnétique. Le réacteur avait préalablement été chargé de billes de fer de 3mm de diamètre à raison de 25kg. La solution, dont le volume initial était de 1 m³, a été injectée à raison de 2.5m³/heure. Après 25 minutes, on a effectué le bilan du passage de la solution dans le lit fluidisé. Les céments de cuivre ont été décantés, lavés et filtrés sur un filtre type Büchner puis séchés et pesés. La teneur de la solution analysée après le premier passage était de 0,43g/l. La quantité de cément pesée était de 1,72kg, le solde du cuivre étant resté fixé sur les billes de fer contenues dans le lit. Le pH de la solution est passé de 1.5 à 1.97. La teneur en fer du cuivre après refusion a été analysée et elle a été trouvée égale à 2%.

Les granules de fer contenus dans le lit ont été lavés à l'eau pendant 1 heure sous activation magnétique, de manière à en détacher le cuivre résiduel. On a recueilli 0.260kg de cuivre ce qui a porté le rendement en cuivre à 95.6%. La teneur en fer de la solution a été analysée et trouvée égale à 2.36g/l ce qui a permis d'établir la valeur du rendement en fer à 74%.

On a répété le même essai dans des conditions rigoureusement identiques, mais en excitant les électroaimants suivant le cycle suivant :
excitation pendant 30 µs dans l'ordre AA', BB', CC', DD' suivi d'une pause de 15µs puis à nouveau une excitation de 30µs dans l'ordre DC', CB' BA' suivi d'une nouvelle pause de 15µs avant que le cycle ne recommence. Simultanément, le chariot était déplacé à une vitesse constante de 10cm/s dans un mouvement de va et vient d'une extrémité à l'autre du réacteur.

On a récupéré cette fois 2.205kg de cuivre titrant 1.1% de fer sous forme de céments, soit un rendement d'extraction de 98.6% environ. La teneur en fer mesurée dans la solution était alors de 1.95g/1 et le pH final était égal à 1.53. Le rendement en fer calculé à partir des analyses de la solution était alors de 96%, contre 74% dans l'essai précédent.

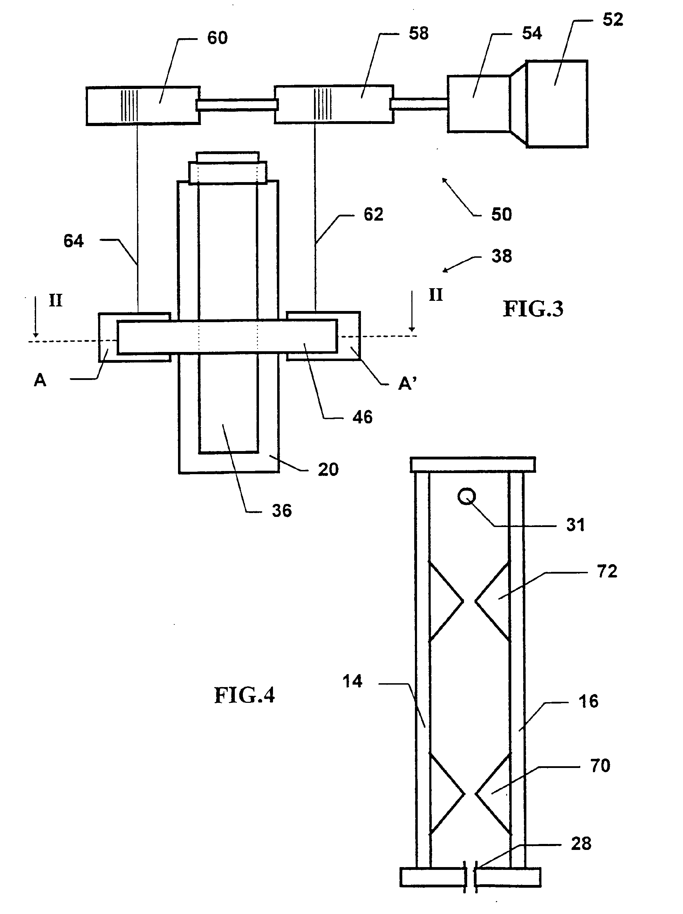

Suivant un deuxième mode de réalisation de l'invention, illustré par la figure 4, le réacteur 12 est modifié de manière à pourvoir les deux grandes parois 14, 16 d'une ou plusieurs restrictions formant des venturis et destinées à provoquer une accélération locale du fluide. En pratique, deux venturis 70, 72 sont positionnés à 60cm et 120cm du bas du réacteur. Les venturis sont constitués par des lames de polypropylène pliées et soudées comme indiqué sur la Figure 4. La fente des venturis est large de 1.5cm et leur hauteur est de 20cm.

Pour illustrer l'influence des venturis, deux séries d'essais ont été réalisées. Dans ces sections du réacteur, la vitesse était accélérée de 11 cm/sec à près de 30cm/s sur 10cm, puis elle repassait de 30 à 11 cm/s sur les 10cm supérieurs. Pour accroître la turbulence dans les venturis on a placé une certaine proportion de grosses particules dans les deux compartiments supérieurs, c'est-à-dire des grosses grenailles de granulométrie de l'ordre de 4,5mm à raison de 0.8kg dans chacun des compartiments, ce qui représentait une proportion de la charge de l'ordre de 6%.

Le premier essai a été réalisé sans activation des électroaimants. On a récupéré après passage de 1m³ de solution 2.12kg de céments de cuivre titrant 1.3% de fer, soit une quantité de cuivre récupérée de 2.09kg. La teneur en cuivre de la solution a été mesurée à 0. 345g/litre. La quantité de céments restée sur le fer a été évaluée par pesée à 0.14kg. La teneur finale en fer de la solution était de 2.06g/l et le pH de 1.63. Le rendement en fer était donc de l'ordre de 89.5%.

On a répété la même expérience mais en activant les électroaimants. On a alors recueilli 2.25kg de cément de cuivre titrant 1.12% de fer soit 2.225kg de cuivre, ce qui correspond à un rendement de récupération de 98.5%. La teneur en fer de la solution a été mesurée à 1.985g/litre soit un rendement de l'ordre de 97.5. Le p H de la solution n'a pratiquement pas varié puisqu'il est passé de 1.5 à 1.52.

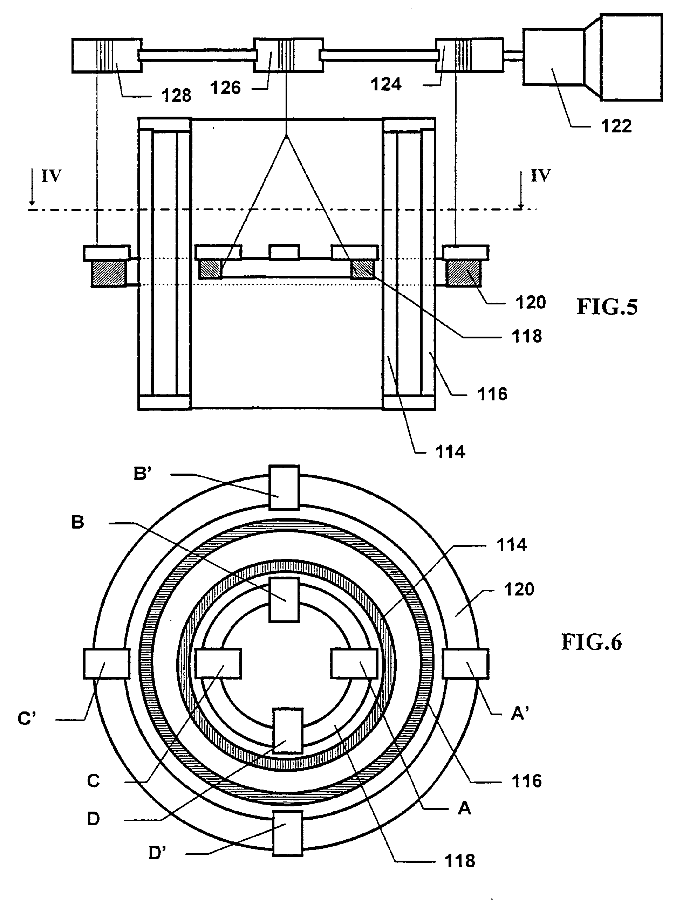

Suivant un troisième mode de réalisation de l'invention, illustré par les figures 5 et 6, le réacteur 112 a une section en couronne. La solution à traiter est contenue entre une paroi intérieure 114 et une paroi extérieure 116, toutes deux cylindriques. La distance entre les deux parois, qui détermine l'épaisseur de la couche de solution, est du même ordre que dans l'exemple précédent, soit 4 cm. Deux chariots 118, 120 sont alors nécessaires pour supporter les électroaimants. Le déplacement des deux chariots est coordonné par un motoréducteur commun 122 entraînant trois treuils coaxiaux 124, 126, 128, 130. Le câble du chariot intérieur comporte quatre élingues.

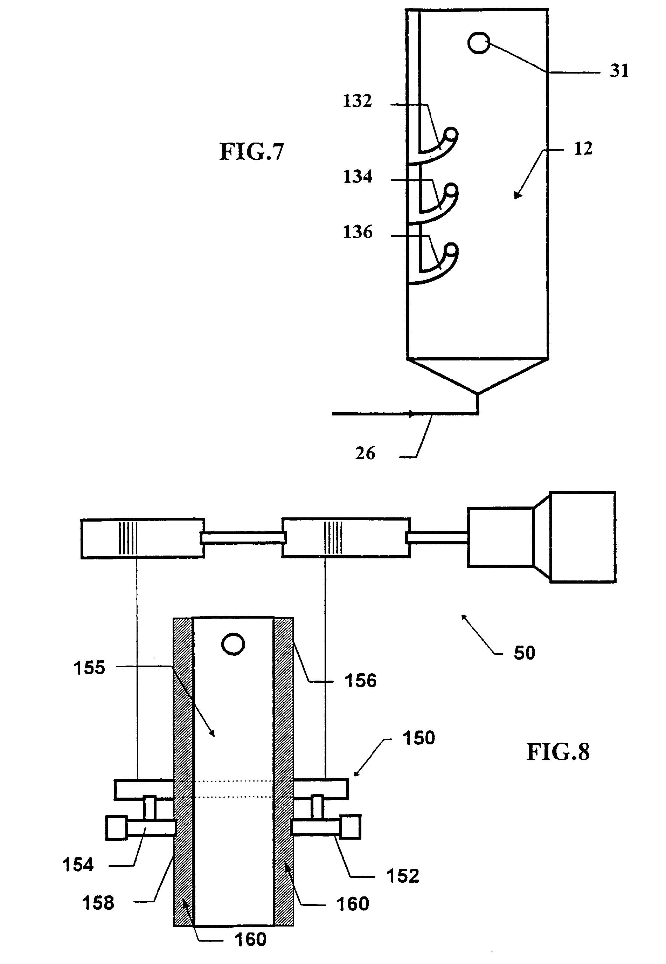

Suivant un quatrième mode de réalisation de l'invention, illustré par la figure 7, l'appareillage permet de mettre en oeuvre une cémentation indirecte en utilisant un métal beaucoup plus réactif que le fer, tel que le zinc ou l'aluminium par exemple. Pour ce faire, le métal réactif (zinc ou aluminium) est introduit en continu dans le réacteur sous forme de fils qui sont débobinés dans des guides 132, 134, 136 débouchant dans le réacteur 12. Les guides sont constitués par des tubes en polymères (polypropylène, polyéthylène...). Ils sont positionnés à raison de deux à trois guides par mètre de largeur. Les fils envahissent alors la zone réactionnelle dans laquelle ils forment des écheveaux qui augmentent la turbulence et offrent une grande surface de contact avec les billes de fer qui prennent un potentiel voisin de celui du fil. Dans ces conditions, les métaux peuvent précipiter sur toute la surface des billes de fer en contact direct ou indirect avec les fils. Les billes de fer ne servent alors que d'agitateur magnétique tandis que le fil se consomme et se trouve remplacé régulièrement par son déroulement dans le réacteur.

Selon un cinquième mode de réalisation de l'invention, représenté schématiquement sur la figure 8, le chariot mobile 150 est équipé de transducteurs ultrasonores 152, 154 destinés à provoquer une activation par les ultrasons. L'application des ultrasons est possible du fait de la conception même du réacteur en lame mince. Dans ce cas, pour permettre aux ondes ultrasonores de se propager à travers le lit fluidisé, il faut que les têtes de transducteurs soient en contact permanent avec le milieu. Pour ce faire, on place une double enveloppe au réacteur 155 qui est donc chemisé par deux membranes souples 156, 158 contenant un gel 160, tel que ceux employés pour la réalisation d'échographies ou un gel de silice colloïdal ou toute autre forme de gel.

Du point de vue économique la réalisation d'un activateur à ultrasons est plus onéreuse que celle d'un activateur électromagnétique, mais elle peut être utile chaque fois que l'on veut éviter toute présence de fer ou de matière ferromagnétique.

Naturellement, l'invention n'est pas limitée aux exemples de réalisation présentés ci-dessus. En particulier, le récipient servant de réacteur peut prendre toute forme permettant de définir deux parois de grande hauteur et de section constante par un plan perpendiculaire à la direction de translation du chariot, à faible distance l'une de l'autre. Ainsi, si l'on choisit comme axe de référence la direction de déplacement linéaire du chariot, il apparaît que chacune des grandes parois du réacteur doit être une voile, au sens géométrique du terme, dont l'enveloppe est une portion de surface cylindrique dont les génératrices s'étendent dans une direction longitudinale. On entend ici par portion de surface cylindrique une surface constituée par un ensemble de segments de droites parallèles à l'axe de référence et s'appuyant sur une courbe quelconque constituant sa directrice. La courbe directrice peut être elle-même un segment de droite, comme illustré par le réacteur des figures 1 à 3, ou bien un cercle, comme illustré par le réacteur des figures 5 et 6.

Par ailleurs, les dimensions des grandes parois peuvent être quelconques. Pour une utilisation industrielle par exemple, des parois de 4 mètres de large et 4 mètres de hauteur, disposées à une distance de 10 cm l'une de l'autre, permettent d'obtenir, avec une vitesse linéaire moyenne du fluide de l'ordre de 12 cm/sec, un débit de 190 m/heure, donc de 5000 tonnes/an pour une solution à 3 g/l de cuivre. Une activation satisfaisante est alors obtenue avec 80 paires d'électroaimants. Si l'on choisissait de réaliser des réacteurs à couronne cylindrique, les dimensions seraient comprises entre 1.3 et 2.6 mètres de diamètre.

## Revendications

1. Procédé d'activation d'une réaction physique et / ou chimique dans un mélange soumis à une agitation et comportant une solution chargée d'un métal noble sous forme ionique et un métal réactif introduit sous forme solide et librement dispersé dans la solution, de manière à obtenir une cémentation consistant à remplacer le métal noble présent dans la solution par ledit métal réactif, procédé **caractérisé en ce qu'**il consiste à :
- injecter la solution par le bas d'un réacteur (12), ayant deux parois (14, 16) se faisant face et proches l'une de l'autre, le mélange remplissant l'espace entre les deux parois (14, 16) et y formant une nappe de faible épaisseur et de longueur importante dans une direction définie par un axe géométrique parallèle aux parois (14, 16),
- provoquer une circulation ascendante de la solution selon une direction verticale parallèle aux parois, de manière à former un lit fluidisé,
- introduire, à la partie supérieure du lit fluidisé, des particules solides ferromagnétiques, qui sont le siège d'un dépôt lors de la réaction de cémentation,
- agiter le mélange par activation d'une pluralité d'électroaimants (A, B, C, D, A', B', C', D') alimentés séquentiellement en courants périodiques pour créer un champ électromagnétique susceptible d'orienter alternativement les particules ferromagnétiques (24) selon deux directions distinctes (xx', zz'), les électroaimants étant disposés à l'extérieur du réacteur (12) pour agir au travers desdites parois (14, 16) sur une zone d'agitation couvrant une partie de ladite nappe et ayant une faible dimension dans la direction de l'axe géométrique,
- et déplacer les électroaimants dans un mouvement alternatif entre une première position extrême et une deuxième position extrême, pour que la zone d'agitation balaie sensiblement l'ensemble dudit espace situé entre les deux parois (14, 16).

2. Dispositif (10) pour la mise en oeuvre du procédé selon la revendication 1 d'activation d'une réaction physique et / ou chimique dans un mélange soumis à une agitation et comportant une solution chargée d'un métal noble sous forme ionique et un métal réactif introduit sous forme solide et librement dispersé dans la solution, de manière à obtenir une cémentation consistant à remplacer le métal noble présent dans la solution par ledit métal réactif, dispositif **caractérisé en ce qu'**il comporte :
- un réacteur (12) destiné à contenir le mélange à agiter, le réacteur ayant deux parois (14, 16) se faisant face et proches l'une de l'autre, le mélange remplissant l'espace entre les deux parois (14, 16) et y formant une nappe de faible épaisseur et de longueur importante dans une direction définie par un axe géométrique parallèle aux parois (14, 16), en provoquant une circulation ascendante de la solution selon une direction verticale parallèle aux parois, de manière à former un lit fluidisé,
- des moyens d'injection de la solution par le bas du réacteur (12),
- des moyens (27, 28, 31) pour provoquer une circulation ascendante de la solution selon une direction verticale parallèle aux parois,
- des moyens d'introduction à la partie supérieure du lit fluidisé, de particules solides ferromagnétiques, qui sont le siège d'un dépôt lors de la réaction de cémentation,
- des moyens d'agitation comportant une pluralité d'électroaimants (A, B, C, D, A', B', C', D') alimentés séquentiellement en courants périodiques pour créer un champ électromagnétique susceptible d'orienter alternativement les particules ferromagnétiques (24) selon deux directions distinctes (xx', zz'), les électroaimants étant disposés à l'extérieur du réacteur (12) pour agir au travers desdites parois (14, 16) sur une zone d'agitation couvrant une partie de ladite nappe et ayant une faible dimension dans la direction de l'axe géométrique,
- et des moyens de déplacement (50, 34, 36, 38) des électroaimants dans un mouvement alternatif entre une première position extrême et une deuxième position extrême, pour que la zone d'agitation balaie sensiblement l'ensemble dudit espace situé entre les deux parois (14, 16),

3. Dispositif selon la revendication 2, **caractérisé en ce que** les particules ferromagnétiques constituent le métal réactif.

4. Dispositif selon la revendication 2, **caractérisé en ce qu'**il comporte des moyens d'introduction du métal réactif sous forme de fils de zinc ou d'aluminium.

5. Dispositif selon la revendication 4, **caractérisé en ce que** les moyens d'introduction du métal réactif comportent des guides (132, 134, 136) débouchant dans le réacteur (12).

6. Dispositif selon la revendication 5, **caractérisé en ce que** les guides sont constitués par des tubes en polymère.

7. Dispositif selon l'une quelconque des revendications 2 à 6, **caractérisé en ce que** chacune des deux parois (14, 16) est conformée de telle manière que sa surface externe est définie géométriquement par un ensemble de segments de droites parallèles à un même axe géométrique et s'appuyant sur une courbe quelconque s'étendant dans un plan perpendiculaire audit axe, la distance entre chaque segment de l'une des parois et l'autre paroi étant constante.

8. Dispositif selon la revendication 7, **caractérisé en ce que** chacune des deux parois (14, 16) est plane ou cylindrique à base circulaire.

9. Dispositif selon l'une quelconque des revendications 2 à 8, **caractérisé en ce** les parois (14, 16) comportent des aspérités (70, 72) formant, à l'intérieur de l'espace délimité par les parois, des restrictions aptes à provoquer localement des accélérations de la solution.

10. Dispositif selon l'une quelconque des revendications 2 à 9, **caractérisé en ce qu'**il comporte un chariot (38) de support des électroaimants, les moyens de déplacement des électroaimants comportant des moyens d'entraînement du chariot.

## Claims

1. A process for activating a physical and/or chemical reaction in a mixture subjected to agitation and comprising a solution charged with a noble metal in ionic form and a reactive metal introduced in solid form and freely dispersed in the solution so as to obtain a cementation consisting in replacing the noble metal present in the solution by said reactive metal, a process **characterized in that** it consists in:
- injecting the solution via the bottom of a reactor (12) having two walls (14, 16) facing one another and close to one another, the mixture filling the space between the two walls (14, 16) and forming therein a layer of small thickness and of great length in a direction defined by a geometric axis parallel to the walls (14, 16),
- causing an ascending flow of the solution in a vertical direction parallel to the walls so as to form a fluidised bed,
- introducing solid ferromagnetic particles, at the top part of the fluidised bed, which particles are the seat of a deposition when the cementation reaction takes place,
- agitating the mixture by activating a plurality of electromagnets (A, B, C, D, A', B', C', D') sequentially supplied with periodic currents to create an electromagnetic field able to direct the ferromagnetic particles (24) alternately in two distinct directions (xx', zz'), the electromagnets being arranged outside the reactor (12) to act through said walls (14, 16) on an agitation zone covering a part of said layer and having a small dimension in the direction of the geometric axis,
- and moving the agitating means in an alternating movement between a first extreme position and a second extreme position so that the agitation zone spans appreciably the whole of said space located between the two walls (14, 16).

2. A device (10) for implementing the process according to claim 1 for activating a physical and/or chemical reaction in a mixture subjected to agitation and comprising a solution charged with a noble metal in ionic form and a reactive metal introduced in solid form and freely dispersed in the solution so as to obtain a cementation consisting in replacing the noble metal present in the solution by said reactive metal, a device **characterized in that** it comprises:
- a reactor (12) designed to contain the mixture to be agitated, the reactor having two walls (14, 16) facing one another and close to one another, the mixture filling the space between the two walls (14, 16) and forming therein a layer of small thickness and of great length in a direction defined by a geometric axis parallel to the walls (14, 16), causing an ascending flow of the solution in a vertical direction parallel to the walls so as to form a fluidised bed,
- means for injecting the solution via the bottom of the reactor (12),
- means (27, 28, 31) for causing an ascending flow of the solution in a vertical direction parallel to the walls,
- means for introducing solid ferromagnetic particles at the top part of the fluidised bed, which particles are the seat of a deposition when the cementation reaction takes place,
- agitating means comprising a plurality of electromagnets (A, B, C, D, A', B', C', D') sequentially supplied with periodic currents to create an electromagnetic field able to direct the ferromagnetic particles (24) alternately in two distinct directions (xx', zz'), the electromagnets being arranged outside the reactor (12) to act through said walls (14, 16) on an agitation zone covering a part of said layer and having a small dimension in the direction of the geometric axis,
- and means (50, 34, 36, 38) for moving the electromagnets in an alternating movement between a first extreme position and a second extreme position so that the agitation zone spans appreciably the whole of said space located between the two walls (14, 16).

3. The device according to claim 2, **characterized in that** the ferromagnetic particles constitute the reactive metal.

4. The device according to claim 2, **characterized in that** it comprises means for introducing the reactive metal in the form of zinc or aluminium wires.

5. The device according to claim 4, **characterized in that** the means for introducing the reactive metal comprise guides (132, 134, 136) opening out into the reactor (12).

6. The device according to claim 5, **characterized in that** the guides are formed by polymer tubes.

7. The device according to any one of the claims 2 to 6, **characterized in that** both of the walls (14, 16) are shaped in such a way that their external surface is defined geometrically by a set of segments of straight lines parallel to one and the same geometric axis and bearing on any curve extending in a plane perpendicular to said axis, the distance between each segment of one of the walls and the other wall being constant.

8. The device according to claim 7, **characterized in that** both of the walls (14, 16) are flat or cylindrical with a circular base.

9. The device according to any one of the claims 2 to 8, **characterized in that** the walls (14, 16) comprise asperities (70, 72) forming restrictions, inside the space bounded by the walls, designed to cause local accelerations of the solution.

10. The device according to any one of the claims 2 to 9, **characterized in that** it comprises a support carriage (38) of the electromagnets, the means for moving the electromagnets comprising means for driving the carriage.

## Patentansprüche

1. Verfahren zur Aktivierung einer physikalischen und/oder chemischen Reaktion in einem Gemisch, das umgewälzt wird, und die eine Lösung umfasst, die ein E-delmetall in lonenform enthält, sowie ein reaktives Metall, das in fester Form eingeleitete wird und frei in der Lösung dispergiert ist, zum Erhalt einer Zementation, die darin besteht, dass das in der Lösung vorhandene Edelmetall durch das reaktive Metall ersetzt wird, Verfahren, das **dadurch gekennzeichnet ist, dass** es folgende Schritte umfasst:
- Einleiten der Lösung von unten her in einen Reaktor (12), der zwei Wände (14, 16) umfasst, die sich gegenüberliegen und nahe zueinander angeordnet sind, wobei das Gemisch den Raum zwischen den beiden Wänden (14, 16) füllt und dort eine Schicht geringer Dicke und großer Länge in einer Richtung bildet, die durch eine zu den Wänden (14, 16) parallele geometrische Achse definiert wird,
- Hervorrufen einer aufsteigenden Zirkulation der Lösung in einer vertikalen, zu den Wänden parallelen Richtung, um ein Wirbelbett zu bilden,
- Einleiten fester ferromagnetischer Teilchen im oberen Bereich des Wirbelbetts, die den Sitz einer Ablagerung bei der Zementationsreaktion bilden,
- Umwälzen des Gemischs mittels mehrerer Elektromagneten (A, B, C, D, A', B', C', D'), die sequenziell mit periodischen Strömen versorgt werden, um ein elektromagnetisches Feld zu erzeugen, das geeignet ist, die ferromagnetischen Teilchen (24) wechselweise in zwei unterschiedliche Richtungen (xx', zz') auszurichten, wobei die Elektromagnete außerhalb des Reaktors (12) angeordnet sind, um durch die Wände (14, 16) hindurch auf eine Umwälzzone einzuwirken, die einen Teil der genannten Schicht erfasst und geringe Abmessungen in Richtung der geometrischen Achse hat,
- und Bewegen der Elektromagnete in einer wechselnden Bewegung zwischen einer ersten Endposition und einer zweiten Endposition, damit die Umwälzzone im Wesentlichen den ganzen Raum zwischen den beiden Wänden (14, 16) durchlauft.

2. Vorrichtung (10) zur Anwendung des Verfahrens nach Anspruch 1 zur Aktivierung einer physikalischen und/oder chemischen Reaktion in einem Gemisch, das umgewälzt wird, und die eine Lösung umfasst, die ein Edelmetall in lonenform enthält, sowie ein reaktives Metall, das in fester Form eingeleitet wird und frei in der Lösung dispergiert ist, zum Erhalt einer Zementation, die darin besteht, dass das in der Lösung vorhandene Edelmetall durch das reaktive Metall ersetzt wird, Vorrichtung, die **dadurch gekennzeichnet ist, dass** sie umfasst:
- einen Reaktor (12), der vorgesehen ist, ein umzuwälzendes Gemisch zu enthalten, wobei der Reaktor zwei Wände (14, 16) umfasst, die sich gegenüberliegen und nahe zueinander angeordnet sind, wobei das Gemisch den Raum zwischen den beiden Wänden (14, 16) füllt und dort eine Schicht geringer Dicke und großer Länge in einer Richtung bildet, die durch eine zu den Wänden (14, 16) parallele geometrische Achse definiert wird, indem eine aufsteigende Zirkulation der Lösung in einer vertikalen, zu den Wänden parallelen Richtung bewirkt wird, sodass ein Wirbelbett entsteht,
- Einleitmittel zum Einleiten der Lösung von unten her in den Reaktor (12),
- Mittel (27, 28, 31) zum Bewirken einer aufsteigenden Zirkulation der Lösung in einer vertikalen, zu den Wänden parallelen Richtung,
- Einleitmittel zum Einleiten fester ferromagnetischer Partikel im oberen Bereich des Wirbelbetts, die den Sitz einer Ablagerung bei der Zementationsreaktion darstellen,
- Umwälzmittel zum Umwälzen des Gemischs mittels mehrerer Elektromagneten (A, B, C, D, A', B', C', D'), die sequenziell mit periodischen Strömen versorgt werden, um ein elektromagnetisches Feld zu erzeugen, das geeignet ist, die ferromagnetischen Teilchen (24) wechselweise in zwei unterschiedliche Richtungen (xx', zz') auszurichten, wobei die Elektromagnete außerhalb des Reaktors (12) angeordnet sind, um durch die Wände (14, 16) hindurch auf eine Umwälzzone einzuwirken, die einen Teil der genannten Schicht erfasst und geringe Abmessungen in Richtung der geometrischen Achse hat,
- und Mitttel (50, 34, 36, 38) zum Bewegen der Elektromagnete in einer wechselnden Bewegung zwischen einer ersten Endposition und einer zweiten Endposition, damit die Bewegungszone im Wesentlichen den ganzen Raum zwischen den beiden Wänden (14, 16) durchlauft.

3. Vorrichtung nach Anspruch 2, **dadurch gekennzeichnet, dass** die ferromagnetischen Teilchen das reaktive Metall bilden.

4. Vorrichtung nach Anspruch 2, **dadurch gekennzeichnet, dass** sie Einleitmittel zum Einleiten des Reaktiven Metalls in der Form von Zink oder Aluminium Fasern enthält.

5. Vorrichtung nach Anspruch 4, **dadurch gekennzeichnet, dass** die Einleitmittel zum Einleiten des reaktiven Metalls Führungen (132, 134, 136) umfassen, die in den Reaktor (12) münden.

6. Vorrichtung nach Anspruch 5, **dadurch gekennzeichnet, dass** die Führungen von Polymerrohren gebildet werden.

7. Vorrichtung nach einem der Ansprüche 2 bis 6, **dadurch gekennzeichnet, dass** jede der beiden Wände (14, 16) so ausgebildet ist, dass ihre Außenfläche geometrisch durch eine Reihe von Segmenten von Geraden definiert wird, die parallel zu ein und derselben geometrischen Achse sind und sich auf eine beliebige Kurve stützen, die sich auf einer zur genannten Achse quer verlaufenden Ebene erstrecken, wobei der Abstand zwischen jedem Segment einer der Wände und der anderen Wand konstant ist.

8. Vorrichtung nach Anspruch 7, **dadurch gekennzeichnet, dass** jede der beiden Wände (14, 16) eben oder zylindrisch mit kreisförmiger Basis ist.

9. Vorrichtung nach einem der Ansprüche 2 bis 8, **dadurch gekennzeichnet, dass** die Wände (14, 16) Unebenheiten (70, 72) umfassen, die innerhalb des von den Wänden gebildeten Raums Begrenzungen bilden, die geeignet sind, lokal eine Beschleunigung der Lösung zu bewirken.

10. Vorrichtung nach einem der Ansprüche 2 bis 9, **dadurch gekennzeichnet, dass** sie einen Schlitten (38) zum Tragen der Elektromagnete umfasst und die Mittel zum Bewegen der Elektromagnete Mittel zum Antreiben des Schlittens umfassen.
